Europäisches Patentamt

European Patent Office

Office européen des brevets

(19)

(11)  EP 0 838 960 A2

(12)  **EUROPEAN PATENT APPLICATION**

(43) Date of publication:
     29.04.1998  Bulletin 1998/18

(51) Int Cl.6: **H04N 17/00**

(21) Application number: 97308605.1

(22) Date of filing: 28.10.1997

(84) Designated Contracting States:
     AT BE CH DE DK ES FI FR GB GR IE IT LI LU MC
     NL PT SE
     Designated Extension States:
     AL LT LV RO SI

(30) Priority: 28.10.1996  IL  11950496

(71) Applicant: ELOP ELECTRO-OPTICS INDUSTRIES
     LTD.
     Rehovot 76111 (IL)

(72) Inventor: Wilf, Itzhak
     Neve Monoson 60190 (IL)

(74) Representative: Pratt, David Martin et al
     Withers & Rogers,
     4 Dyer's Buildings,
     Holborn
     London EC1N 2JT (GB)

(54)  **System and method for audio-visual content verification**

(57)  The invention provides a method for video content verification, operative to compare and verify the content of a first audio-visual stream with the content of a second audio-visual stream, comprising the steps of extracting characteristic data from a first audio-visual stream, extracting characteristic data from a second audio-visual stream, and comparing the extracted characteristic data from the first and second audio-visual streams. The invention also provides a system for carrying out the method.

Fig. 1

EP 0 838 960 A2

## Description

### Field of the Invention

The present invention relates to audio-visual test and measurement systems and more particularly to a method and apparatus for comparing a given content stream with a reference content stream for verifying the correctness of a given data stream and for detecting various content-related problems, such as missing or distorted content, as well as badly synchronized content streams such as audio or sub-titles delayed with respect to the video stream.

"Audio-visual content" is herein defined as a stream or sequence of video, audio, graphics (sub-pictures) and other data where the semantics of the data stream is of value. The term "stream" or "sequence" is of particular importance, since it is assumed that the ordering of content elements along a time or space line constitutes part of the content.

### Background of the Invention

Elementary content streams may be combined to a composite stream. Starting with a simple monophonic audio or video transmission, an application which involves two video streams (for stereoscopic display), six or eight surround audio channels and several sub-picture channels can be formed. Generally, the relative alignment of these streams is highly significant and should be verified.

In known systems, an analysis is made of video signal for detecting disturbances of that signal, such as illegal colors. An "illegal color" is one that is outside the practical limit set for a particular format. Other types of video measurement involve injecting known signals at the source and evaluating certain properties thereof at the receiving end.

With the introduction of the serial digital interface (SDI) standard, now used as a carrier for video, audio and data, error detection schemes are designed for testing data integrity. Such a scheme has already been proposed.

The known video test and measurement systems are, however, generally not capable of detecting content-related problems, such as missing or surplus frames, program time shift, color or luminance distortions which are within the acceptable parameter range, mis-alignment of content streams such as audio or sub-pictures with respect to video, etc.

In many facilities, an observer will look at the display to detect quality problems. An experienced operator may detect and interpret a variety of problems in recording and transmission. An observer can do good rule-based or subjective evaluation of video content, however, human inspection of content is costly and unpredictable. Additionally, some content-related defects cannot be detected by an observer.

As state of the art content delivery technologies such as multi-channel Digital TV, Digital Video Disk and the Internet provide more content and interactivity, content-related problems are more likely to occur, since the path from the content sources to the end-user becomes more complicated. Additionally, the huge amounts of content generated, edited, recorded and transmitted in multiple channels and multiple distribution slots (such as video-on-demand) make human inspection almost impossible.

It is therefore a broad object of the invention to provide a computerized method and system for comparing a given content stream with a reference content stream, for verifying that the given stream is in fact the correct one and to detect various content-related defects.

In many cases, the reference stream consists of the original program material and the actual stream consists of the broadcast or played content. In other cases, the designation of one stream as the reference stream is arbitrary, for example, comparing one content stream with a backup stream. However, for convenience of description hereinafter. the terms "reference content stream" and "actual content stream" will be used, without limiting the generality of the invention.

For illustrative purposes only, the invention will be described by two applications: broadcast automation and digital versatile disc (DVD) pre-mastering. This description however, is not intended to limit the generality of the invention or its applicability to other domains.

Today's multi-channel, multi-program applications cannot be controlled manually. Including commercials and program trailers, a daily schedule may consist of hundreds of video segments, intended to play seamlessly. Such a schedule is usually implemented by an automation system. The schedule is logged into the system as some form of a table (a "play-list") describing the program's name, start time, duration and source, e.g., storage media, unique identifier, time-code of first frame.

The storage media can be a tape or a digital file. Generally, the program source material is organized in an hierarchical manner, with most of the content stored off-line. The forthcoming programs are loaded on a tape machine and sometimes, as in the case of a commercial or trailer, digitized to a disk-based server. The complex paths of the various elements of content may further increase the content mismatch probability.

An example of such an automation system is the ADC-100 from Louth Automation. ADC-100 can run up to 16 lists simultaneously, and control multiple devices including disk servers, video servers, tape machines, cart machines, VTRs, switchers, character generators and audio carts. The present invention can verify the identity and integrity of the broadcast content, providing important feedback for the automation system or facility manager.

DVD is a new generation of the compact disc format which provides increased storage capacity and performance, especially for video and multimedia applications. DVD for video is capable of storing eight audio tracks and thirty-two "sub-picture" tracks, which are used for subtitles, menus, etc. These can be used to put several selectable languages on each disc. The interactive capabilities of consumer DVD players include menus with a small set of navigation and control commands, with some functions for dynamic video stream control, such as seamless branching, which can be used for playing different "cuts" of the same video material for dramatic purposes, censorship, etc. DVD-ROM, which will be used for multi-media applications, will exhibit a higher level of interactivity.

Since DVD contains multiple content streams with many options for branching from one stream to the other or combining several streams, such as a menu or subtitles overlaid on a video frame, one has to verify that a given set of initial settings, followed by a specific set of navigation commands, indeed produces the correct content. This step in DVD production is known as "emulation", currently designed to be performed by an observer. The present invention also allows automation of DVD emulation.

It is important to note that in DVD, the video image is composed of the motion picture stream overlaid by sub-pictures or graphics, such as sub-titling. Although all video streams and all sub-picture bitmaps are available before emulation takes place, the composite image depends on the actual user's choices and the user's "navigation" in the content tree. It is impractical to generate all possible compositions prior to emulation and use these as the reference content. Therefore, descriptors of the actual content must be compared against appropriate descriptors of the component streams.

In both broadcast or DVD applications, it may be necessary to detect video compression artifacts. While some of these are due to the mathematical compression itself, others may arise during transmission/playback, due to buffer overflow and other reasons. A common image compression artifact is "blockiness" or the visibility of edges between image blocks. Detecting artifacts in a completely rule-based manner, such as looking for these edges, may be misleading since such edges may be present in the original, uncompressed image. An image-reference based approach in which the compressed image is compared with the original image provides a good tool for algorithm evaluation. However, in a practical situation, such an image will not be available at the receiving/playback end for real-time detection of compression artifacts. It is therefore necessary to compare compressed material with the original material, based on concise content descriptors computed from both streams.

It is an object of the present invention to provide a content verification system in which an audio-visual program broadcast or recorded on storage media can be compared with a reference program.

The audio-visual program comprises at least one video channel, or at least one audio channel, or at least one sub-picture channel comprising sub-titles, closed-captions and any kind of auxiliary graphics information which is timed synchronously with the video or audio. While in certain applications sub-pictures are embedded in the video image sequence, in other applications they are carried by a separate stream/file.

## Summary of the Invention

The present invention therefore provides a method of comparing the content obtained by broadcast or playback with a reference content, including the steps of extracting frame characteristic data streams from said reference content and from actual received or playback content, aligning said streams and comparing said streams on a frame-by-frame basis.

U.S. Patent No. 5,339,166, entitled "Motion-Dependent Image Classification for Editing Purposes," describes a system for comparing two or more versions, typically of different dubbing languages, of the same feature film. By identifying camera shot boundaries in both versions and comparing sequences of shot length, a common video version, comprising camera shots which exist in all versions, can be automatically generated. While the embodiment described in this patent allows, in principle, the location of content differences between versions at camera shot level, frame-by-frame alignment for all frames in the respective version is not performed. Further, the differences detected are in the existence or absence of video frames as a whole. In contrast, the present invention allows frame-by-frame inspection of color properties, detection of compression artifacts, audio distortions. etc.

Furthermore, in the U.S. patent, the content of each frame is fixed and characteristic data are computed from the content. The present invention, on the other hand, addresses the on-line composition of a content stream from basic content streams, such that characteristic data are pre-computed only for these basic streams. Given the branching/navigation/editing commands, a composite reference characteristic data stream is predicted from the component characteristic data stream and then compared with the actual content stream.

Moreover, the present invention does not depend on the specific format/representation of the content sources and streams. In the same application, one stream may be analog and the other digital. Additionally, one stream may be compressed and the other may be of full bandwidth. Typically, in a broadcast environment, the input will be CCIR-601 digital video and AES digital audio. Multiple audio streams may be due to different dubbing languages, as well as stereo and surround sound channels.

Generally, the extraction of characteristic data will be done in real-time, thus saving intermediate storage and also enabling real-time error detection in a broadcasting environment. However, this is not a limitation, since the present invention can be used off-line by recording both the reference and the actual audio-visual program. When working off-line, processing can be slower than real-time or faster, depending on the computational resources. When verifying dubs or copies of video cassettes, a faster than real-time performance may be needed, depending, of course, on the availability of a suitable analog to digital converter which can cope with fast-forward video signals.

## Brief Description of the Drawings

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

Fig. 1 is a block diagram of a top level flow of processing of an audio-visual content verification system;
Fig. 2 is a block diagram of a circuit for storing detected content problems;
Fig. 3 schematically illustrates an array of video sequence characteristic data;
Fig. 4 schematically illustrates an array of video frame or still image spatial characteristic data;
Fig. 5 schematically illustrates a set of regions in a video frame;
Fig. 6 schematically illustrates relative location of graphics sub-pictures with respect to the video frame;
Fig. 7 is a block diagram illustrating extraction of sub-title characteristic data;
Fig. 8 is a block diagram illustrating sub-title image sequence processing;
Fig. 9 schematically depicts a record of sub-pictures characteristic data;
Fig. 10 is a block diagram illustrating derivation of audio characteristic data;
Fig. 11 is a block diagram of a circuit for the selection of anchor frames for coarse alignment;
Fig. 12 is a block diagram of a circuit for alignment of a composite stream with the component reference streams;

Fig. 13 is a block diagram of a circuit for frame verification processing; and
Fig. 14 is a block diagram of a characteristic data design workstation.

## Detailed Description of Preferred Embodiments

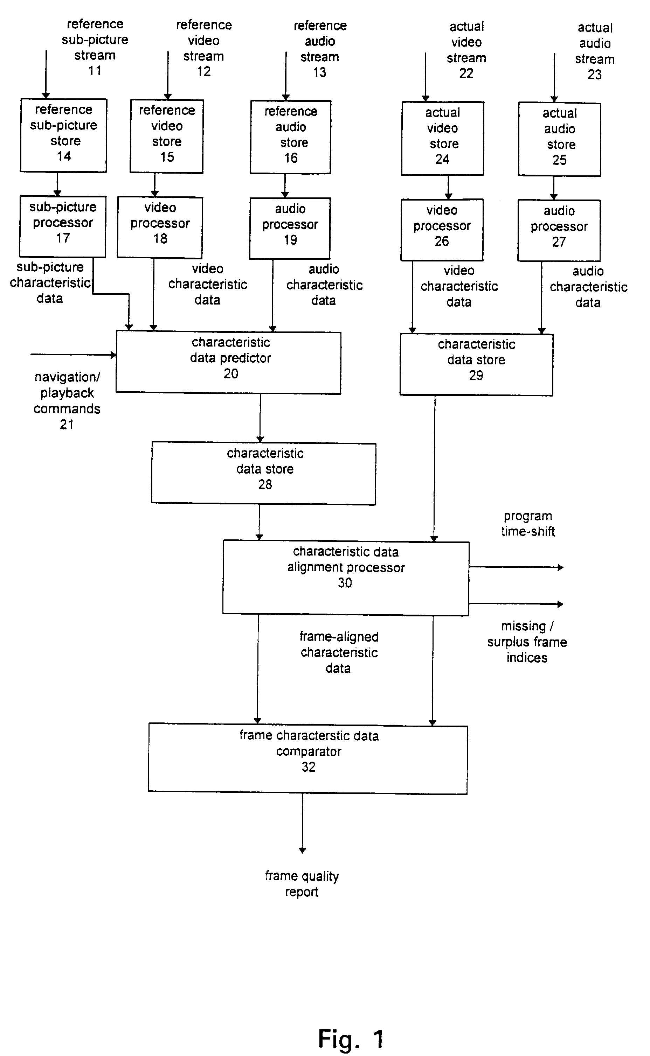

With reference now to the drawings, Fig. 1 shows a top level flow of processing of an audio-visual content verification system according to the present invention. Reference sub-picture stream 11, video stream 12 and audio stream 13 are stored in their respective stores 14, 15 and 16, to be eventually processed by processors 17, 18 and 19, respectively. The combination of sub-pictures with video, as well as transition/branching between program segments, is applied at characteristic data level by predictor 20, driven by navigation/playback commands 21.

Actual video stream 22 and audio stream 23 are stored in their respective stores 24 and 25, to be later processed by processors 26 and 27 respectively. The video stream 22 and the corresponding characteristic data are composed of video and sub-pictures.

Once in the characteristic data stores 28 and 29, the data streams are input to the characteristic data alignment processor 30, resulting in frame-aligned characteristic data. The alignment process also results in a program time-shift value, as well as indices or time-codes of missing or surplus frames. Once the data are frame-aligned, characteristic data are compared on a frame-by-frame basis in comparator 32, yielding a frame quality report.

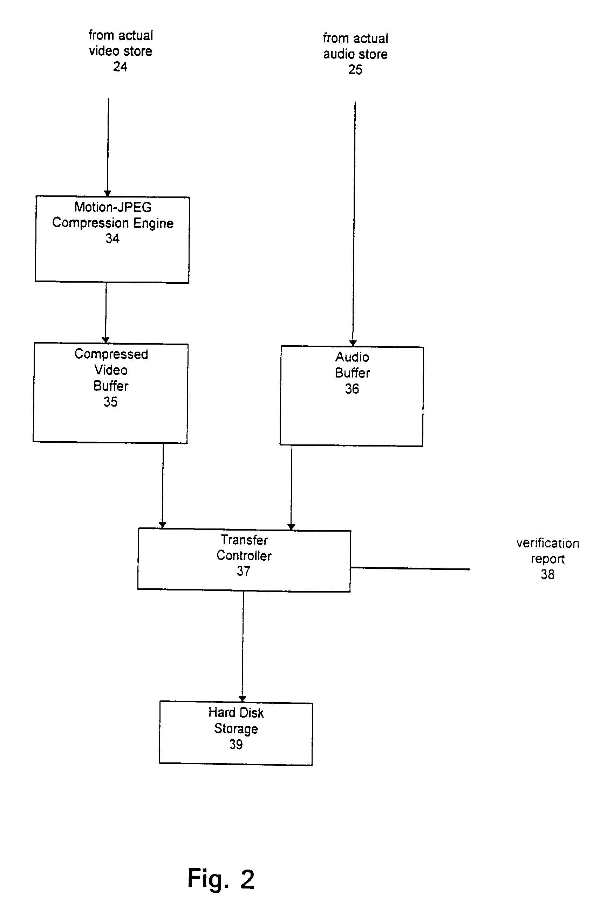

Fig. 2 shows means for storing detected content problems. Recently played/received video from store 24 undergoes compression in engine 34 and is then stored in buffer 35. The recently played/received audio from store 25 is directly stored in buffer 36.. Transfer controller 37 is activated by verification reports 38 to transfer the content into hard disk storage 39, where it can be later analyzed.

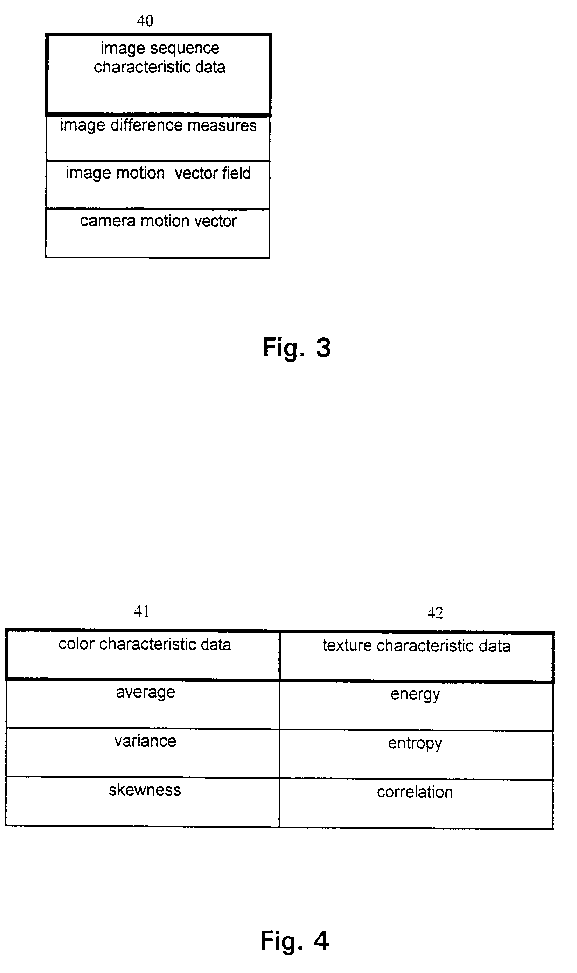

Fig. 3 shows an array of video sequence characteristic data 40. The list comprises image difference measures, as well as image motion vectors. These measures may include properties of the histogram of the difference image, obtained by subtracting two adjacent images, as is known *per se*. In particular, the "span" characteristic data, defined as the difference in gray levels between a high (e.g., 85) percentile and a low (e.g., 15) percentile of said histogram, was found to be useful. Alternatively, a measure of difference of intensity histogram of two adjacent images, also by a known technique, may be used.

Motion vector fields are computed at pre-determined locations while using a block-matching motion estimation algorithm. Alternatively, a more concise representation may consist of camera motion parameters, preferably estimated from image motion vector fields.

Fig. 4 shows an array of video frame or still image spatial characteristic data. The list comprises color characteristic data 41. texture characteristic data 42 and statistics derived from image regions. Such statistics may include the mean, the variance and the median of luminance values. Useful color characteristic data include the first three moments: average, variance and skewness of color components:

$$\mu_i = \frac{1}{N} \sum_{j=1}^{N} p_{ij}$$

$$\sigma_i = \sqrt{\frac{1}{N} \sum_{j=1}^{N} (p_{ij} - \mu_i)^2}$$

$$s_i = \sqrt[3]{\frac{1}{N} \sum_{j=1}^{N} (p_{ij} - \mu_i)^3}$$

where $p_{ij}$ is the value of the i-th color space component of the j-th image pixel. Color spaces of convenience may include the (R,G,B) representation or the (Y,U,V), which provide luminance characteristic data through the Y component.

Texture provides measures to describe the structural composition, as well as the distribution, of image gray-levels. Useful texture characteristic data are derived from spatial gray-level dependence matrices. These include measures such as energy, entropy and correlation.

The selection of characteristic data for a specific application of content verification is important. Texture and color data are important for matching still images. Video frame sequences with significant motion can be aligned by motion characteristic data. For more static sequences, color and texture data can facilitate the alignment process.

When computing color and texture characteristic data, the region of support, that is, the image region on which these data are computed, is significant. Using the entire image, or most of it, is preferred when robustness and reduced storage are required. On the other hand, deriving multiple characteristics at numerous, relatively small image regions has two important advantages:

1) better spatial discrimination power (like a low resolution image); and
2) when overlaid by sub-picture (graphics), those regions which do not intersect with graphics data still can be matched with corresponding characteristic data of the original video frame.

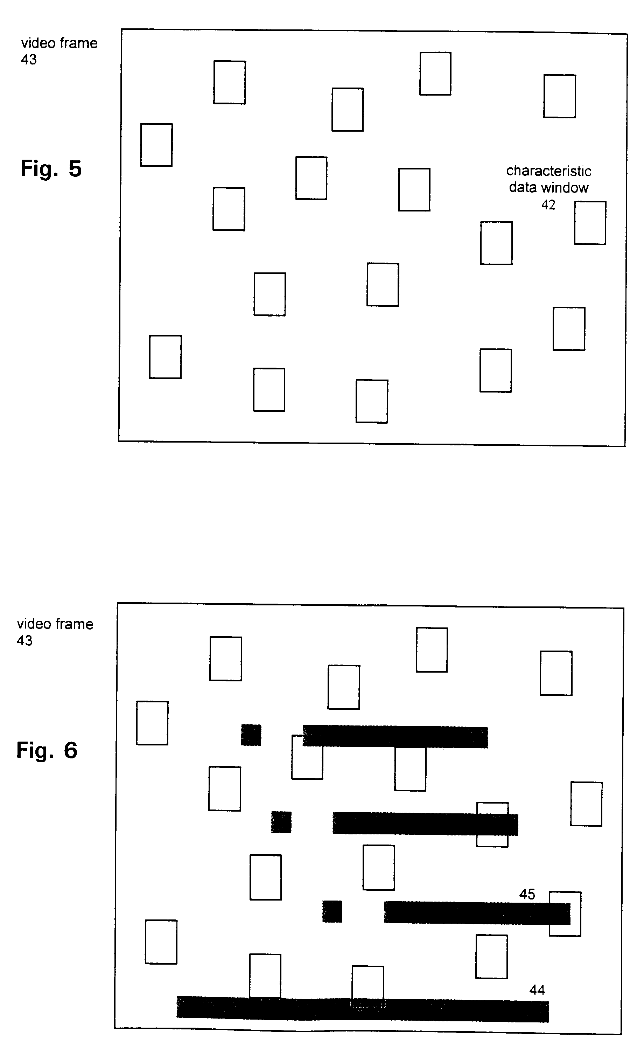

Fig. 5 shows a set of regions 42 in a video frame 43, such that color or texture characteristic data are computed for each such region. Fig. 6 illustrates the relative location of graphics sub-pictures with respect to the video frame. Number 44 represents a sub-title sub-picture and number 45 represents a menu-item sub-picture.

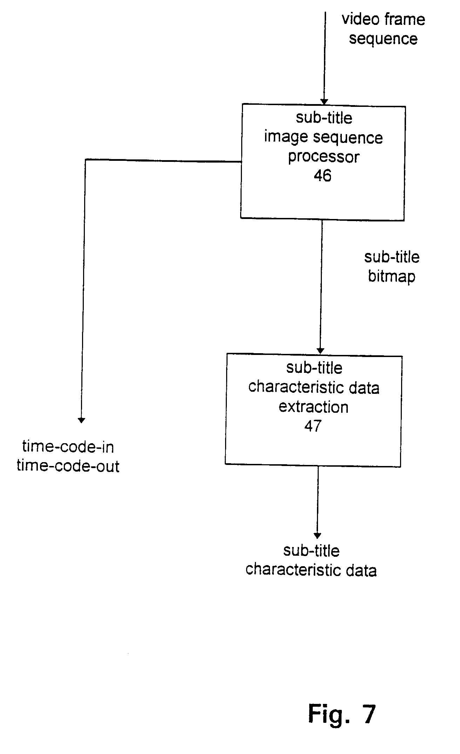

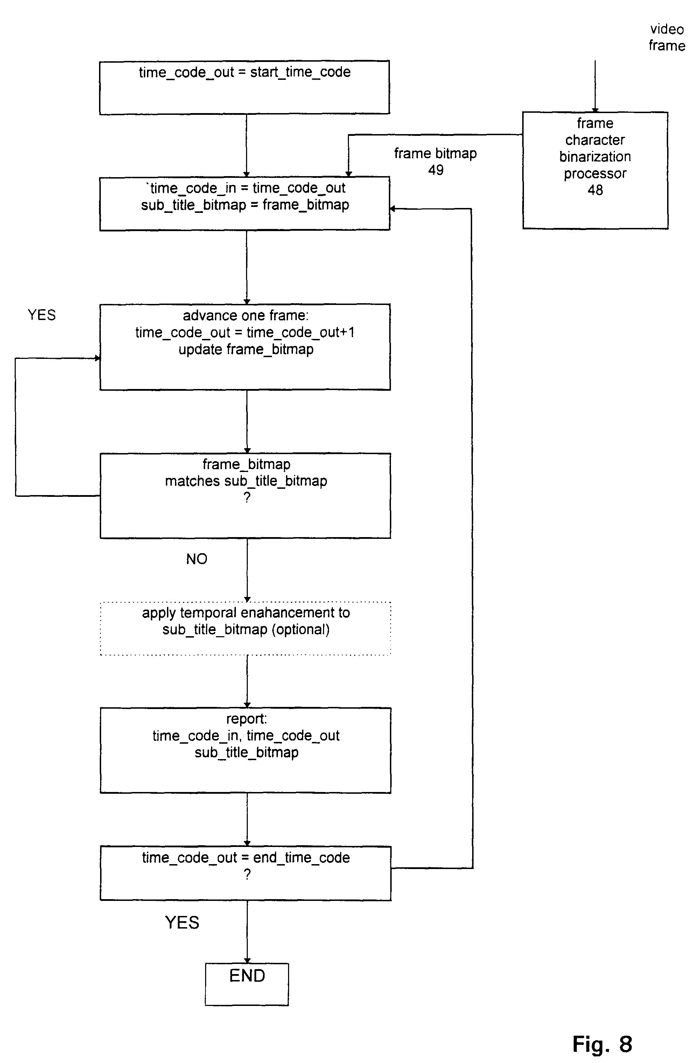

Figs. 7 and 8 show the extraction of sub-title characteristic data. Sub-titles or closed captions in a movie are used to bring translated dialogues to the viewer. Generally, a sub-title will occupy several dozen frames. A suitable form for sub-title characteristic data is time-code-in, time-code-out of that specific sub-title, with additional data describing the sub-title bitmap. The sub-title image sequence processor 46 analyses every video frame of the sequence to detect specific frames at which sub-title information is changed. The result is a sequence of sub-title bitmaps, with the frame interval each such bitmap occupies in a time-code-in, time-code-out representation. Characteristic data are then extracted by unit 47 from the sub-title bitmap.

Fig. 8 shows the sub-title image sequence processor 46. The video image passes through a character binarization processor 48, operative to identify pixels belonging to sub-title characters and paint them white, for example, where the background pixels are painted black. At every frame, the current frame bitmap 49 is compared, or matched, with the stored sub-title bitmap from the first instance of that bitmap. At the first mismatch event, the sub-title bitmap is reported with the corresponding time-code interval, and a new matching cycle begins.

The matching process can be implemented by a number of binary template-matching or correlation algorithms. The spatial search range of the template-matching should accommodate mis-registration of a sub-title and additionally the case of scrolling sub-titles.

The characteristic data of a single sub-title should be concise and allow for efficient matching. The sub-title bitmap, usually run-length coded, is a suitable representation. Alternatively, one could use shape features of individual characters and a sub-title text string, using OCR software.

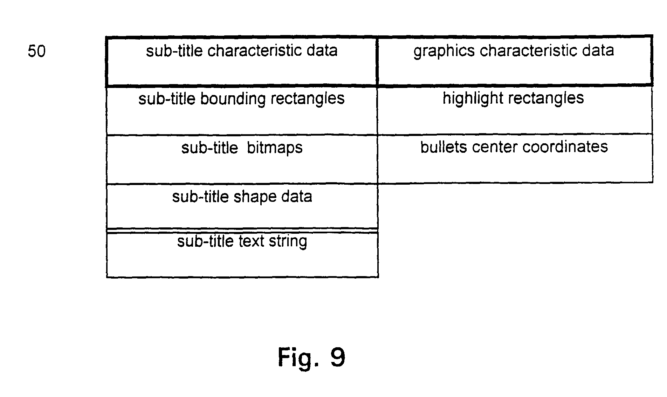

In addition to text, sub-pictures consist of graphics elements such as bullets, highlight or shadow rectangles, etc. Useful characteristic data are obtained by using circle and rectangle detectors. Fig. 9 shows a record 50 of sub-pictures characteristic data.

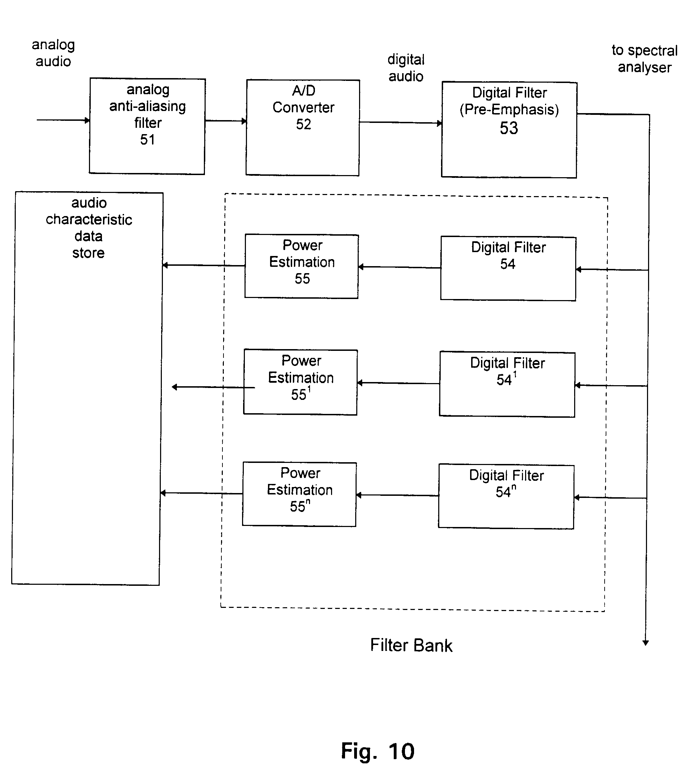

Fig. 10 shows the derivation of audio characteristic data. In analog form, the signal is digitized by the arrangement comprising an analog anti-aliasing filter 51 and an A/D converter 52 and then filtered by the pre-emphasis filter 53. Spectral analysis uses a digital filter bank 54, $54^1$ ...$54^n$. The filter output is squared and integrated by the power estimation unit 55, $55^1$ ...$55^n$. The set of characteristic data is computed for each video frame duration (40 msec for PAL, or 33.3 msec for NTSC) and stored in store 56. Window duration controls the amount of averaging or smoothing used in power computation. Typically, a 60 or 50 msec window, for an overlap of 33%, can be used.

The filter bank is a series of linear phase FIR filters, so that the group delay for all filters is zero and the output signals from the filters are synchronized in time. Each filter is specified by its center frequency and its bandwidth.

In many instances, the reference characteristic data stream is not available explicitly, but has to be derived from said source characteristic data and from playback commands such as denoted in Fig. 1. A simple case is when a program consists of consecutive multiple content segments. Each such segment is specified by a source content identifier , a beginning time-code and an ending time-code. Said reference characteristic data stream can be constructed or predicted from the corresponding segments of source characteristic data by means of concatenation. If content verification involves computing the actual content segment insertion points, these source characteristic data segments will be padded by characteristic data margins to allow for inaccuracies in insertion.

Sometimes the transitions involve not only cuts, but also dissolves or fades. When the composite image is a linear combination of two source images, some characteristic data can be predicted based on the original source data as well as the blending values. These data include, for example, color moments computed over some region of support. In alignment and verification, the predicted values are compared against the actual values.

An important step in the verification process is the frame-by-frame alignment of the characteristic data streams. The choice of the subset of characteristic data used for alignment is important to the success of that step. Specifically, frame difference measures, such as the span described above, are well suited to alignment. A coarse-fine strategy is employed, in which anchor frames are used to solve the major time-shift between the content streams. Once that shift is known, fine frame-by-frame alignment takes place.

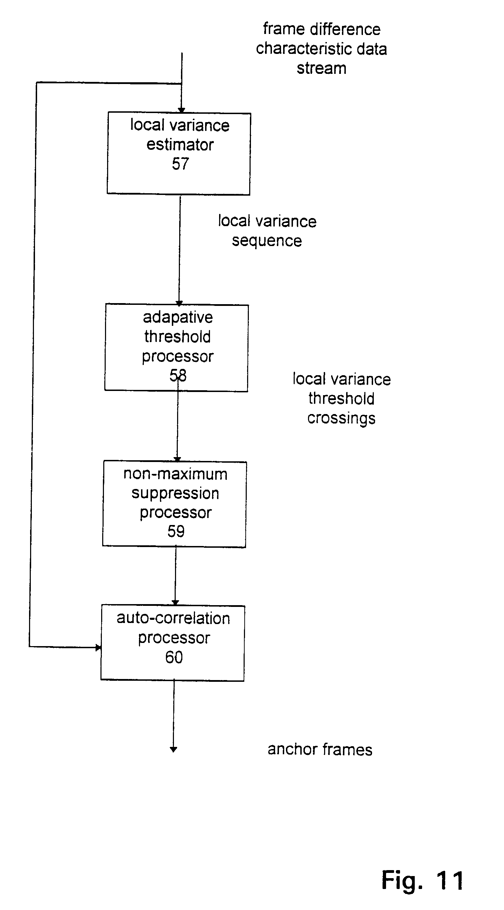

An anchor frame is one with an unique structure of characteristic data in its neighborhood. Fig. 11 shows the selection of anchor frames for coarse alignment. Given the frame difference data, for example, the span sequence, local variance estimation is effected in estimator 57 by means of a sliding window. Processors 58 and 59 produce a list of local variance maxima which are above a suitable threshold. A consecutive processing step in processor 60 estimates the auto-correlation of the candidate anchor frame with its frame difference data neighborhood.

In the step of reference anchor frame selection, a further criterion may be used to increase the effectiveness of the alignment step. The anchor frames are graded by uniqueness, i.e., dissimilarity with other anchor frames, to reduce the probability of false matches in the next alignment step. Uniqueness is computed by means of cross-correlation between the anchor frame and other anchor frames. By associating the number of anchor frames with a cross-correlation value lower than a specified threshold with the specific anchor frame, those frames with highest uniqueness are selected.

Uniqueness pruning is applied only to the reference anchor frames.

Given the anchor frames of reference and actual stream, coarse alignment now begins. Each reference and actual anchor frames pair such that the cross-correlation between their respective neighborhoods is above threshold and yields a plausible alignment offset, expressed in frame count. All pairs are tested and the offsets are stored in an offset histogram array. False matches passing the cross-correlation tests will be manifested as random offset values or noise in the histogram. A nominal case of time-shifted actual content, with few or no dropped frames, will yield a single peak in the histogram. In the case of a larger number of missing or surplus frames, such as a few missing frames at each transition, the voting process described above will produce several peaks, each corresponding to a significant shift.

Having solved the time-shift between corresponding stream characteristic data intervals which are bounded by matched anchor frames, the respective intervals have to be matched. The matching process can be described as a sequence of edit operators which transform the first interval of frame characteristic data to the second interval. The sequence consists of three such operators:

1) deletion of a frame from a first stream;
2) insertion of a frame to a first stream; and
3) replacement of a frame from a first stream with a frame from a second stream.

Having associated a cost with each of these operations, the fine frame alignment problem has now been transformed to finding a minimum cost sequence of operators which implements the transformation. If $m$ is the length of the first interval and $n$ is the length of the second interval in frames, then the matching problem can be solved in space and time proportional to $(m*n)$. All that remains is to set the respective costs. Deletion and insertion can be assigned a fixed cost each, based on *a-priori* information on the probability of dropped or surplus frames. Replacement is a distance measure on the characteristic data vector, such as weighted Euclidean distance.

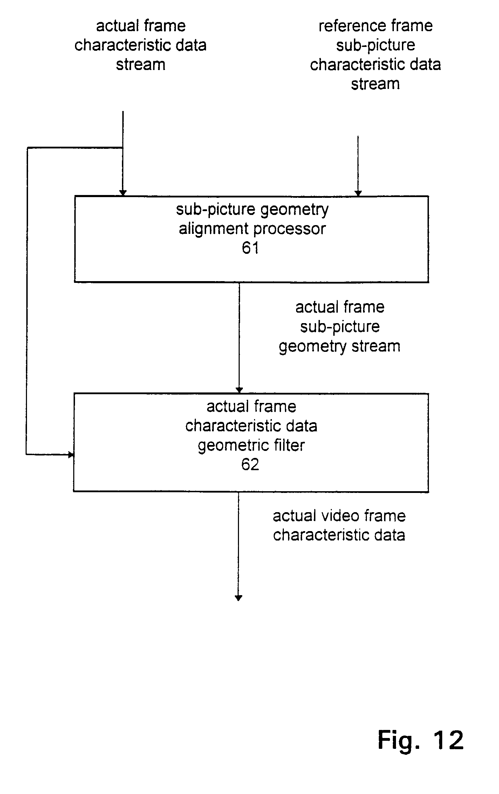

Fig. 12 shows the alignment of a composite stream with the component reference streams by means of a processor 61 and geometric filter 62. In a simple case, sub-title graphics of the language of choice are combined with the video frame sequence. The location of sub-titles in the video frame can be specified either manually, in the characteristic data design workstation as described below, or can be automatically computed, based on analysis of the sub-title sub-picture stream. For that simple case, video frame verification is done in the image region free from sub-titles. Additionally, sub-title picture verification is done in the sub-title image region.

A more difficult case is when graphics are overlaid on the video frame, such as in the case of displaying a menu in a DVD player. The location of menu bullets and text may be, for example, as illustrated in Fig. 6. For that specific case, it is assumed that the graphics stream has been pre-processed to extract the graphics regions of support, in the form of bounding rectangles for text lines and graphics primitives. These regions are stored as auxiliary characteristic data. By comparing graphics stream characteristic data with composite video frame stream graphics characteristic data in the respective graphics regions, the streams can be aligned. Once aligned, the composite frame graphics regions are known to be those of the corresponding graphics stream. Then, based on these regions, only color and texture actual frame characteristic data which are not occluded by overlay graphics [see Fig. 6] are compared with the respective reference data.

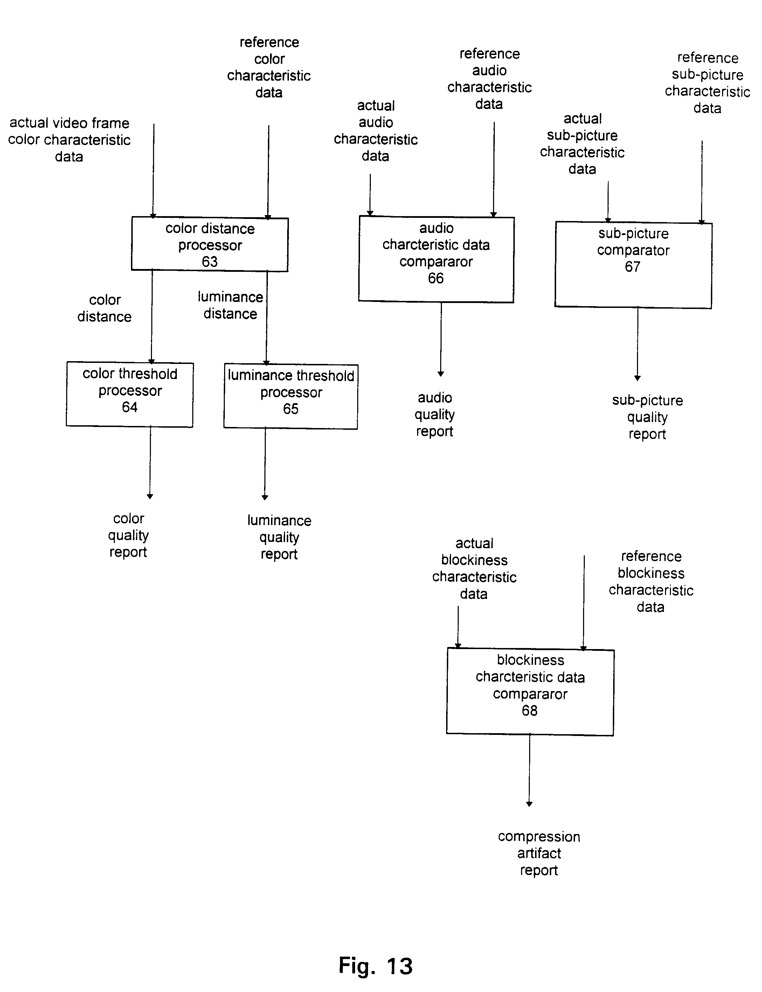

Fig. 13 depicts the frame verification processes performed by the frame characteristic data comparator 32 (Fig. 1), which start from aligned characteristic data streams. It is important to note that the characteristic data alignment processor 30 detects a variety of content problems. Failure in alignment may be due to the fact that a wrong content stream is playing, or the content stream is severely time-shifted, or the stream is distorted beyond recognition. A successful alignment yields the indices of missing or surplus frames. Once aligned, each actual content frame is compared with the corresponding reference frame, based on the characteristic data.

Then for the remaining data, frame-by-frame comparison can take place in processors 63, 64 and 65 and comparators 66 and 67. The distance between characteristic data of corresponding frames detects quality problems such as luminance or color change, as well as audio distortions. By comparing graphics characteristic data, errors in sub-picture content and overlay may be detected. Also, by comparing characteristic data sensitive to compression artifacts, such artifacts can be detected.

The comparison process requires the notions of distance and threshold. For vector characteristic data such as color, luminance and audio, a vector distance measure is used, such as the Mahalonobis distance:

$$D = (X^r - X^a)^T C^{-1} (X^r - X^a)$$

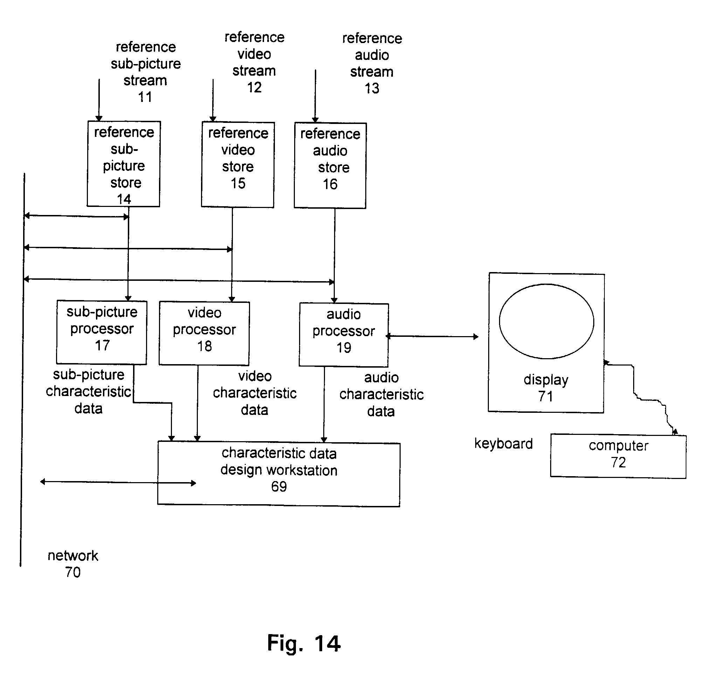

where $X^r, X^a$ are the reference and actual characteristic data vectors. $C$ is the co-variance matrix which models pairwise relationships among the individual characteristic data. The proper threshold may be computed at a training phase, using the characteristic data design workstation described hereinafter with reference to Fig. 14.

Comparator 68 compares blockiness characteristic data derived from the reference and actual video frames, respectively. Such data may include power estimates of a filter designed to enhance an edge grid structure, such as, for example, the grid spacing equals the compression block size, which is usually 8 or 16. By comparing these estimates with the reference value, an increase in blockiness may be detected. As described above, absolute blockiness may be misleading, since it may originate from the original frame texture.

Comparison of sub-pictures can be done at bitmap level, at the exclusive OR of the corresponding bitmaps, by computing the distance between corresponding shape characteristic data vectors, or by comparing recognized sub-title text strings, where applicable.

The term "frame-by-frame," which is used in conjunction with the comparison process, relates to the fact that once the content streams are aligned, inspection of every frame with the corresponding frame can be done. Clearly, comparison may include all frames or a sub-set of the frames.

The efficiency, robustness and content verification could be enhanced by using features that have greater discriminating power over the full reference content. By designing a software-configurable characteristic data set, the actual data of the full set which is implemented will be enabled.

Fig. 14 shows a characteristic data design workstation 69. The characteristic data acquisition part of the work-station replicates the reference content processing front-end of Fig. 1. In addition, workstation 69 has access, by network 70, to the actual content data and not just to the characteristic data, for display at 71 and further analysis at 72.

The development of the specific content verification application is conducted using an arrangement of a combination of manual, semi-automatic and automatic processes. For example, the user may specify the sub-titling type-face and its location in the video frame. Additionally, the user may select several representative content segments and the system then extracts a full characteristic data set, possibly in multiple passes or slower than real-time, ranking their discriminating power over the sample reference content and retaining their best features.

It will be evident to those skilled in the art that the invention is not limited to the details of the foregoing illustrated embodiments, and that the present invention may be embodied in other specific forms without departing from the spirit or essential attributes thereof. The present embodiments are, therefore, to be considered in all respects as illustrative and not restrictive, the scope of the invention being indicated by the appended claims rather than by the foregoing description, and all changes which come within the meaning and range of equivalency of the claims are, therefore, intended to be embraced therein.

The method of the invention may further comprise the step of computing actual characteristic data from at least part of the actual broadcast or playback content streams. It may also comprise the step of computing reference characteristic data from at least part of said reference content streams.

Said reference characteristic data may be derived from video frame sequences, still images, audio and graphics, and said actual characteristic data may be derived from a video sequence and an audio channel. Also, said video image sequence characteristic data may include an image motion vector field, or data derived from an image difference signal, and said video frame or still image characteristic data may include luminance statistics in predefined regions of said frame or image.

Preferably, said video frame or still image characteristic data also include texture characteristic data and/or colour data, said colour characteristic data include colour moments, said video frame or still image characteristic data also include a low resolution or highly compressed version of the original image, said audio characteristic data include audio signal parameters, estimated at a window size which is comparable with video frame duration, said graphics characteristic data exhibit printed text, and said graphics characteristic data also exhibit common graphics elements, including bullets and highlighted rectangles.

In the method of the invention, said step of predicting may include generating a characteristic data stream from source streams and navigation commands or playlists, branching from one source stream to another source stream. Said step of predicting may also include generating a characteristic data stream from source streams and transition commands such as cut, dissolve, fade to/from black, or said step may include computing characteristic data of graphics sub-pictures overlay on a video image sequence or still.

The evaluation of the information content of a certain frame may be based on the temporal variation of characteristic data in said frame and in its adjacent frames.

The method may further comprise grading the information content of all frames in a sequence, denoting frames with locally maximal information content as anchor frames.

The method may still further comprise evaluating the similarity between two anchor points, based on a measure of temporal correlation between the respective sets of neighbouring characteristic data. Alternatively, the method may further comprise evaluating the similarity between all pairs of anchor frames, such that, for each pair, one frame is from the reference data and the other is from the actual data.

The method may further comprise reporting said alignment results, including the time shift between the designed and actual content broadcast-playback, as well as an indication of missing or surplus frames. The step of comparing may comprise first aligning the graphics of said composite frame sequence with said reference graphics streams, and the step of aligning may facilitate computing the location of all overlaid graphics in said composite frame sequence. The step of computing may facilitate filtering out colour and texture actual frame characteristic data which are occluded by said overlay graphics.

The method may further comprise comparing characteristic data of aligned frames to indicate quality or content problems, and said problems may be selected from the group comprising luminance or colour shifts, compression artifacts, audio artifacts, and audio or sub-pictures mismatch or mis-alignment.

**Claims**

1. A method for video content verification, operative to compare and verify the content of a first audio-visual stream with the content of a second audio-visual stream, the method comprising the steps of:

   extracting characteristic data from a first audio-visual stream;
   extracting characteristic data from a second audio-visual stream; and
   comparing the extracted characteristic data from said first and second audio-visual streams.

2. A method as claimed in claim 1, wherein the step of comparison comprises:

   aligning said first and second audio-visual streams on a frame-by-frame basis; and
   performing a frame-by-frame comparison of said aligned streams of frames.

3. A method as claimed in claim 1 or claim 2, wherein said first and second streams are selected from the group comprising the elementary content streams, including video image sequence, audio channel, and sub-picture streams.

4. A method as claimed in any one of claims 1 to 3, wherein said comparison of first and second streams yields at least one parameter, including time-shift between the desired and the actual timing of said second stream; list of missing frames in said second stream; list of surplus frames in said second stream; sub-title content error; graphics content error, colour distortion, and luminance shift.

5. A method for video content verification, operative to compare and verify the content of a first audio-visual stream with the content of a second audio-visual stream, wherein said second audio-visual content stream is defined by at least one source content stream and a set of editing instructions, the method comprising the steps of:

extracting characteristic data from said first audio-visual stream;
extracting characteristic data from said source content stream, and
computing characteristic data of said second content-stream, based on characteristic data of said source content stream and on said editing instructions.

6. A method as claimed in claim 5, wherein said instructions are in the form of an Edit Decision List or Digital Video Disk branching instructions.

7. A method as claimed in any one of claims 1 to 6, wherein said first or second stream is a reference content stream.

8. A method as claimed in any one of claims 1 to 6, wherein said first and/or second streams are actual broadcast or playback content streams.

9. A method as claimed in claim 7, further comprising the step of predicting the reference characteristic data stream from said reference characteristic data and from playback instructions.

10. A method as claimed in any one of claims 1 to 9, wherein said characteristic data extraction is optionally augmented by user input facilitating the extraction/relative weighting of said data.

11. A method as claimed in claim 7, further comprising aligning the reference characteristic data stream with the actual characteristic data stream, on a frame-by-frame basis, and evaluating the information content of a certain frame.

12. A method as claimed in claim 11, further comprising computing the frame-index offset between the reference and actual frames, based on the most likely offsets derived from evaluation of the similarity between all anchor frames.

13. A method as claimed in claim 11, further comprising matching the reference frame sequence with the actual frame sequence, based on an identified frame-index offset, and further comprising the step of designating an actual frame as a surplus frame, or assigning to it a unique reference frame.

14. A method as claimed in any one of claims 1 to 13, further comparing a composite video frame sequence including graphics overlaid on a video frame sequence, with component reference streams consisting of the original video frame sequence as well as the graphics streams.

15. A system for audio-visual content verification, operative to compare and verify the content of a first audio-visual data stream with the content of a second audio-visual data stream, the system comprising:

means for extracting characteristic data from a first audio-visual data stream;
means for extracting characteristic data from a second audio-visual data stream; and
means for comparing characteristic data of said first and second audio-visual data streams.

16. A system as claimed in claim 15, wherein said comparison means comprises:

means for aligning said audio-visual data streams on a frame-by-frame basis; and
means for frame-by-frame comparison of said aligned data streams.

17. A system as claimed in claim 15 or claim 16, wherein said first and second data streams are selected from the group comprising video image sequence, audio channel, and sub-picture data streams.

18. A system as claimed in any one of claims 15 to 17, wherein said means for comparison of said reference data streams yields at least one of the parameters including time-shift between the desired and the actual timing of said second data stream; list of missing frames in said second data stream; list of surplus frames in said second data stream; sub-title content error; graphics content error; colour distortion, and luminance shift.

19. A system for audio-visual content verification, operative to compare and verify the content of a first audio-visual data stream with the content of a second audio-visual data stream, wherein said second audio-visual data stream is defined by at least one source content data stream and a set of editing instructions, the system comprising:

means for extracting characteristic data from said first audio-visual data stream;
means for extracting characteristic data from said source content data stream; and
means for computing characteristic data of said second content data stream, based

on characteristic data of said source content data stream and said editing instructions.

20. A system as claimed in claim 19, wherein said editing instructions are in the form of an Edit Decision List or Digital Video Disk branching instructions.

reference
sub-picture
stream
11

reference
video
stream
12

reference
audio
stream
13

actual
video
stream
22

actual
audio
stream
23

reference
sub-picture
store
14

reference
video
store
15

reference
audio
store
16

actual
video
store
24

actual
audio
store
25

sub-picture
processor
17

video
processor
18

audio
processor
19

video
processor
26

audio
processor
27

sub-picture
characteristic
data

video
characteristic
data

audio
characteristic
data

video
characteristic
data

audio
characteristic
data

characteristic
data predictor
20

navigation/
playback
commands
21

characteristic
data store
29

characteristic
data store
28

program
time-shift

characteristic data
alignment processor
30

missing /
surplus frame
indices

frame-aligned
characteristic
data

frame characterstic data
comparator
32

frame quality
report

# Fig. 1

from actual
video store
24

from actual
audio store
25

Motion-JPEG
Compression Engine
34

Compressed
Video
Buffer
35

Audio
Buffer
36

Transfer
Controller
37

verification
report
38

Hard Disk
Storage
39

# Fig. 2

40

| image sequence characteristic data |
|---|
| image difference measures |
| image motion  vector field |
| camera motion vector |

# Fig. 3

| 41 color characteristic data | 42 texture characteristic data |
|---|---|
| average | energy |
| variance | entropy |
| skewness | correlation |

# Fig. 4

video frame
43

**Fig. 5**

characteristic
data window
42

video frame
43

**Fig. 6**

45

44

video frame
sequence

sub-title
image sequence
processor
46

sub-title
bitmap

time-code-in
time-code-out

sub-title
characteristic data
extraction
47

sub-title
characteristic data

# Fig. 7

video
frame

| time_code_out = start_time_code |

| frame character binarization processor 48 |

frame bitmap 49

| time_code_in = time_code_out sub_title_bitmap = frame_bitmap |

YES

| advance one frame: time_code_out = time_code_out+1 update frame_bitmap |

| frame_bitmap matches sub_title_bitmap ? |

NO

| apply temporal enahancement to sub_title_bitmap (optional) |

| report: time_code_in, time_code_out sub_title_bitmap |

| time_code_out = end_time_code ? |

YES

| END |

**Fig. 8**

50

| sub-title characteristic data | graphics characteristic data |
|---|---|
| sub-title bounding rectangles | highlight rectangles |
| sub-title bitmaps | bullets center coordinates |
| sub-title shape data | |
| sub-title text string | |

# Fig. 9

analog
audio

digital
audio

to spectral
analyser

analog
anti-aliasing
filter
51

A/D
Converter
52

Digital Filter
(Pre-Emphasis)
53

audio
characteristic
data
store

Power
Estimation
55

Digital Filter
54

Power
Estimation
$55^1$

Digital Filter
$54^1$

Power
Estimation
$55^n$

Digital Filter
$54^n$

Filter Bank

Fig. 10

frame difference
characteristic data
stream

```
          ┌──────────────────┐
          │  local variance  │
          │    estimator     │
          │        57        │
          └──────────────────┘
```

local variance
sequence

```
          ┌──────────────────┐
          │    adapative     │
          │    threshold     │
          │    processor     │
          │        58        │
          └──────────────────┘
```

local variance
threshold
crossings

```
          ┌──────────────────┐
          │   non-maximum    │
          │   suppression    │
          │    processor     │
          │        59        │
          └──────────────────┘
```

```
          ┌──────────────────┐
          │ auto-correlation │
          │    processor     │
          │        60        │
          └──────────────────┘
```

anchor frames

# Fig. 11

actual frame
characteristic data
stream

reference frame
sub-picture
characteristic data
stream

sub-picture geometry
alignment processor
61

actual frame
sub-picture
geometry stream

actual frame
characteristic data
geometric filter
62

actual video frame
characteristic data

Fig. 12

reference
color
characteristic
data

actual video frame
color characteristic
data

reference
audio
characteristic
data

actual
audio
characteristic
data

reference
sub-picture
characteristic
data

actual
sub-picture
characteristic
data

color distance
processor
63

audio
charcteristic data
compararor
66

sub-picture
comparator
67

color
distance

luminance
distance

color threshold
processor
64

luminance threshold
processor
65

audio
quality
report

sub-picture
quality
report

color
quality
report

luminance
quality
report

actual
blockiness
characteristic
data

reference
blockiness
characteristic
data

blockiness
charcteristic data
compararor
68

compression
artifact
report

**Fig. 13**

reference
sub-picture
stream
11

reference
video
stream
12

reference
audio
stream
13

reference
sub-
picture
store
14

reference
video
store
15

reference
audio
store
16

sub-picture
processor
17

video
processor
18

audio
processor
19

display
71

sub-picture
characteristic
data

video
characteristic
data

audio
characteristic
data

keyboard

computer
72

characteristic data
design workstation
69

network
70

**Fig. 14**